# EUROPEAN PATENT APPLICATION

(11) **EP 4 454 910 A1**
(43) Date of publication of application: **30.10.2024**
(21) Application number: 23169410.0
(22) Date of filing: 24.04.2023
(51) Int. Cl.: B60J 5/06

(54) **SAFETY DOOR FOR A VEHICLE**

(71) Applicant: Röllnreiter, Hans, 85617 Niclasreuth (DE); Wagenstaller, Hubert, 85617 Aßling (DE)
(72) Inventor: Röllnreiter, Hans, 85617 Niclasreuth (DE)
(74) Representative: Kimpfbeck, Thomas

(57) **Abstract**

The present invention relates to a safety door 100 for a vehicle 1 and to a vehicle. The safety door 100 includes at least one rigid sliding door leaf 120 having through openings 123, 125 for letting air pass through and a lower guiding means 128 and/or an upper guiding means 126, wherein the lower guiding means 128 and/or an upper guiding means 126 are configured to engage with a respective guide track for arranging the at least one rigid sliding door leaf 120 movable relative to a door opening 230 of the vehicle 1. A door lock is configured to lock the safety door in a closed position, while a door 200 of the vehicle 1 assigned to the door opening 230 is opened, wherein in its closed position, the safety door 100 closes the door opening 230.

## Description

### Field of the invention

The present invention relates to a safety door for a vehicle and to a vehicle, particularly a camping vehicle including at least one safety door.

### Background

In recent years, camping vehicles have become very popular, as they provide freedom and flexibility for the travelers. Compared to traditional camping, camping vehicles, allow to travel wherever you want and stop whenever you want, without having to worry about finding a campsite or setting up a tent.

Further, camping vehicles provide a comfortable and convenient way to travel and camp as they generally include a bed to sleep in, a kitchen to cook in, and often-times even a bathroom to use. Still further, camping vehicles allow an easy access to outdoor recreation activities such as hiking, fishing, and biking.

However, particularly in summertime camping vehicles tend to heat up during the day so that at night time the indoor temperature is uncomfortable high. Hence, it is common practice to open a door or window of the vehicle to allow cool air enter the vehicle at night time. Likewise, craftsmen or suppliers may need to leave their vehicle open while they work or take a break to prevent excessive heating of the vehicle.

However, this increases the risk of burglars targeting the (camping, delivery or craftsmen) vehicles or wild animals enter the (camping, delivery or craftsmen) vehicles. Further, pets might leave a camping vehicle unnoticed.

Hence, there is a need in the art to provide for vehicles, such as camping, delivery or craftsmen vehicles that allow fresh air enter, while preventing unwanted guests from entering.

### Summary

The object is achieved by a safety door for a vehicle, particularly a camping vehicle, delivery or craftsmen vehicle, according to claim 1 and by a vehicle, particularly a camping, delivery or craftsmen vehicle, according to claim 12. Further aspects of the invention are given in the dependent claims as well as in the following description.

Particularly, the object is achieved by a safety door for a vehicle, such as a camping vehicle, a delivery vehicle or a craftsmen vehicle. It is to be noted that the safety door can be assembled to any kind of vehicle, that requires safely closing a door opening, while letting air pass through. The safety door may be initially assembled to the vehicle (ex factory), e.g. as optional equipment, or may be available as a retrofitting kit.

The safety door is provided as a sliding door and includes at least one rigid sliding door leaf having through openings for letting air pass through.

Hence, when being closed, air can enter the vehicle, particularly a camping, delivery or craftsmen vehicle, while unwanted persons (such as burglars) and/or wild animals (such as raccoons, foxes, bears) are prevented from entering the vehicle. Further, pets (such as cats or dogs) cannot leave the vehicles unnoticed.

Particularly, the rigid sliding door leaf may provide for a certain resistance class of the safety door. The resistance class can be defined in accordance with EN 1627:2021 in terms of resistance time and modus operandi, according to the following table:

| **Resistance class in the sense of EN 1627:2021** | **Resistance time** | **Type of perpetrator / modus operandi** |
|---|---|---|
| RC 1 N | Static and dynamic testing only, no manual testing | Components in the resistance class have limited to low basic protection against attempts to break in using physical force (mainly vandalism), such as kicking, jumping, shouldering, pushing up and tearing out. In addition, a non-destructive manipulation test lasting a maximum of three minutes is carried out using small tools to dismantle components that |
| | | can be unscrewed from the outside as preparation for further tests. |
| RC 2 N | 3 minutes | The opportunity perpetrator also tries to break open the locked and bolted component with simple tools such as screwdrivers, pliers and wedges. |
| RC 2 | 3 minutes | The opportunity perpetrator also tries to break open the locked and bolted component with simple tools such as screwdrivers, pliers and wedges. |
| RC 3 | 5 minutes | The usual perpetrator additionally tries to break open the locked and bolted component with a second screwdriver and a crow bar. |
| RC 4 | 10 minutes | The experienced perpetrator additionally uses sawing tools and impact tools, such as a striking axe, chisel, hammer and chisel, and a cordless drill. |
| RC 5 | 15 minutes | The experienced perpetrator additionally uses power tools, such as a drill, jigsaw or reciprocating saw and angle grinder with a max. disc diameter of 125 mm.. |
| RC 6 | 20 minutes | The experienced perpetrator additionally uses powerful power tools, such as a drill, jigsaw or reciprocating saw and angle grinder with a max. disc diameter of 250 mm. |

It is to be noted, that EN 1627:2021 requires a glassing for achieving certain resistance classes. Here, the resistance classification of the safety door deviates from the EN 1627:2021 specification as a glassing is not mandatory. Rather, the above classification of the safety door relates to the respective resistance times.

Further, the safety door includes a lower guiding means and/or an upper guiding means, wherein the lower guiding means and/or an upper guiding means are configured to engage with a respective guide track for arranging the at least one rigid sliding door leaf movable relative to a door opening of the (camping, delivery or craftsmen) vehicle.

The guiding means may include guide rollers, sliding elements and/or the like. In a particular example, the guiding means may engage with the respective guide track with a positive locking so that the rigid sliding door leaf cannot be unhooked (in particular in a direction substantially perpendicular to the opening/closing movement direction).

Even further, the safety door includes a door lock. The door look being configured to lock the safety door in a closed position, while a door of the (camping, delivery or craftsmen) vehicle that is assigned to the door opening is opened, wherein in its closed position, the safety door closes the door opening. Hence, the safety door is adapted to securely close the door opening while the actual vehicle's door is opened.

Further, the safety door may be a bypass door, having at least two rigid sliding door leafs, that are configured to slide past each other. In this case, the guide tracks may be formed as multi-rail guide tracks. In a particular aspect, the bypass door may include at least three, or at least four rigid sliding door leafs.

Even further, the safety door may be a roll door or an accordion door, having at least two rigid sliding door leafs being hinged to each other so that the safety door rolls up or folds while opening. In a particular aspect, the accordion door may include at least three, or at least four, or at least five, or at least six rigid sliding door leafs.

Further, the closing/opening direction of the safety door may be substantially horizontal or substantially vertical (when the vehicle stands on a flat, horizontal surface).

In a particular aspect, the safety door may include an actuator for automatically opening and/or closing the safety door. The actuator may be an electric motor that is adapted to be powered by the vehicles power supply. The actuator may be controlled via a switch or control panel of the vehicle. Further, the actuator may be remotely controlled, allowing the safety door being opened/closed by a remote control, such as the vehicles key, a separate remote control or an app running on a mobile device (smartwatch, smartphone, tablet, and/or the like).

Further, the rigid sliding door leaf may include a frame element and a grid structure. The grid structure fills the frame element at least partially. The frame element may include at least two lateral, vertical side beams, a bottom beam and a top beam, connecting the lateral side beams. Further, support beams being provided between the lateral side beams and/or the bottom beam and the top beam may be provided. The support beams may be substantially horizontal or vertical. The beams forming the frame element may be interconnected by welding, screwing riveting, and/or the like. Further, the frame element may be molded or over molded from a (reinforced) thermoplastic material.

Further, the frame structure may support or may be integrally formed with the lower guiding means and/or an upper guiding means.

The grid structure may include a perforated sheet metal and/or interconnected beams. The beams of the grid structure may be interconnected by welding, screwing riveting, and/or the like. Further, the grid structure may be molded or over molded from a (reinforced) thermoplastic material. In a particular aspect, the grid structure may be integrally formed with the frame element.

The rigid sliding door leaf and particularly the frame element and/or the grid structure, may be made at least in part from aluminum, steel and/or fiber reinforced plastics, wherein the reinforcement fibers may be chosen from the group of steel fibers, glass fibers, aramid fibers, carbon fibers, PBO fibers and/or boron fibers.

In a particular aspect, the rigid sliding door leaf may include a hinged portion being arranged pivotable relative to the rigid sliding door leaf, and/or the rigid sliding door leaf may include a sliding portion being arranged slidable relative to the rigid sliding door leaf. The hinged portion and/or the sliding portion may be folded out or extended, respectively when the safety door is in its closed position. Thus, the door opening can be completely covered and closed by the rigid sliding door leaf. For opening the safety door, the hinged portion and/or the sliding portion may be folded in or retracted, respectively so as to provide for a smaller form factor for storing the safety door. Further, folding in or retracting the hinged/sliding portion may allow to not cover a window of the camping, delivery or craftsmen vehicle, when the safety door is in its open position.

The sliding portion may include a slidable grid that is slidable relative to the remaining rigid sliding door leaf. In an alternative aspect, the sliding portion may include telescopic beams that can be extended for closing the door opening completely (when being extended) and for opening a window portion of the rigid sliding door leaf when being retracted. For example, (horizontal and/or vertical) beams of the grid structure may be provided as telescopic beams forming the sliding portion.

Further, the through openings of the rigid sliding door leaf may have an equivalent diameter in a range of 1 cm to 15 cm, or in a range from 3 cm to 9 cm, or in a range from 5 cm to 7 cm. The equivalent diameter is defined here as a diameter of a sphere being able to pass the through opening. The through openings allow air to pass through and into the (camping, delivery or craftsmen) vehicle, while providing for sufficient safety.

In a particular aspect, the door lock of the safety door may be adapted to engage with a corresponding locking element of the vehicle. The corresponding locking element may also be assigned to the door of the vehicle and may be a locking striker and/or a locking plate. Hence, the safety door and the door of the vehicle may lock with the same corresponding locking element. Thus, no modification of the corresponding locking element is necessary, when retrofitting the safety door.

Further (additionally or alternatively), the corresponding locking element may be assigned to the guide track. For example, locking pins of the door lock of the safety door may engage with respective recesses provided in the guide track(s). Those recesses being corresponding locking elements.

In a further aspect, the door lock may be adapted to be locked via a central locking system of the vehicle. Thus, the user may conveniently lock the safety door in the same way as locking the vehicle's door.

The guide track that engages with the lower guiding means and/or the upper guiding means may be configured to be attached to the vehicle (e.g. for retrofitting the safety door in a vehicle, such as a camping, delivery or craftsmen vehicle), or to be integrated in an autobody of the vehicle (e.g. ex-factory). The attachment of the lower guiding means and/or the upper guiding means may be achieved by screwing, riveting, welding, gluing and/or any other known attachment means. In a particular aspect, the guide track is integrally formed with the autobody of the vehicle (such as a camping, delivery or craftsmen vehicle). Further, the guide track that engages with the lower guiding means and/or the upper guiding means may be wall-mount guide track, a bottom-mount guide track or a ceiling-mount guide track.

The object is further achieved by a vehicle according to the present invention. The vehicle may be a camping vehicle, a delivery vehicle, a craftsmen vehicle or any other kind of vehicle. The vehicle is not limited to any size or weight and comprises a door opening and a door, particularly a sliding door or a hinged door. The door is adapted to open and close the door opening. During driving, the door needs to be closed and can be opened, when the vehicle stands still (e.g. for passengers, packages, tools and/or luggage entering/leaving the vehicle).

Further, the vehicle comprises a safety door, wherein the safety door is configured according to any one of the aspects given above. The safety door is assigned to the door opening and adapted to close the door opening, while the door of the vehicle is opened.

Hence, in case the safety door is closed, air can enter the vehicle, while unwanted persons (such as burglars) and/or wild animals (such as raccoons, foxes, bears) are prevented from entering the vehicle, which may be a camping vehicle, a delivery vehicle or a craftsmen vehicle. Further, pets (such as cats or dogs) cannot leave the vehicles unnoticed.

The safety door may be guided along an inner side of a wall of the vehicle when being opened and/or closed. Further, the safety door may be guided along an outer side of a wall of the vehicle, when being opened and/or closed, so as to be sandwiched between the door and the wall.

In an alternative aspect, the safety door may be guided within a pocket of a wall of the vehicle, when being opened and/or closed, or the safety door may be guided within a pocket of the door of the vehicle, when being opened and/or closed.

Additionally, a mosquito repellent may be provided, hindering mosquitos and other insects from entering the vehicle. The mosquito repellent may be a net element, a curtain element (such as an area blind or a pleated blind) or a door element that is assigned to the door opening of the vehicle. The mosquito repellent may include respective guiding means for guiding an opening and closing movement of the mosquito repellent. Those mosquito repellent guiding means may run substantially parallel to the guiding means of the safety door. In a particular aspect, the mosquito repellent (and particularly the guiding means thereof) may be routed along an inner side of a wall of the vehicle, within a pocket of the wall of the vehicle and/or within a pocket of the door of the vehicle.

### Brief description of the figures

Further features and advantages will be apparent from the following description as well as the accompanying figures, to which reference is made. The figures show in detail:
- Fig. 1: a schematic perspective view of a safety door for a vehicle;
- Fig. 2A to 2C: schematic side views of a (camping) vehicle, while a safety door is operated;
- Fig. 3A to 3D: schematic cut views of a safety door and a side wall of a vehicle, and
- Fig. 4: a schematic perspective view of further safety door.

### Detailed description of figures

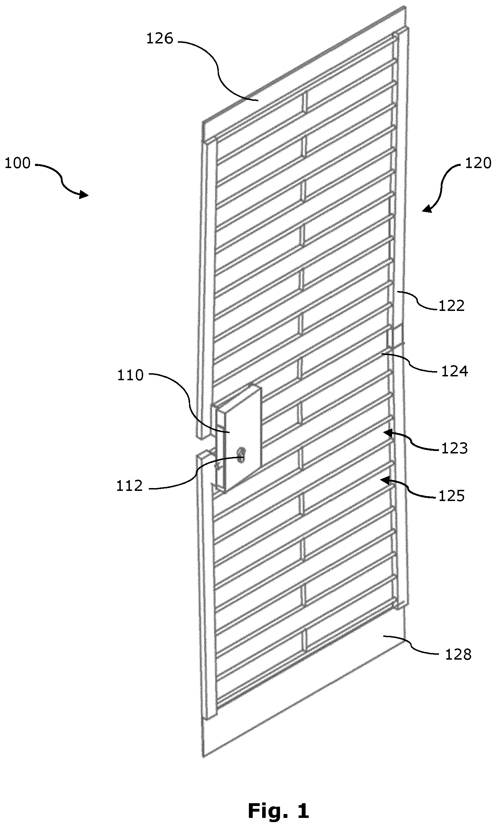

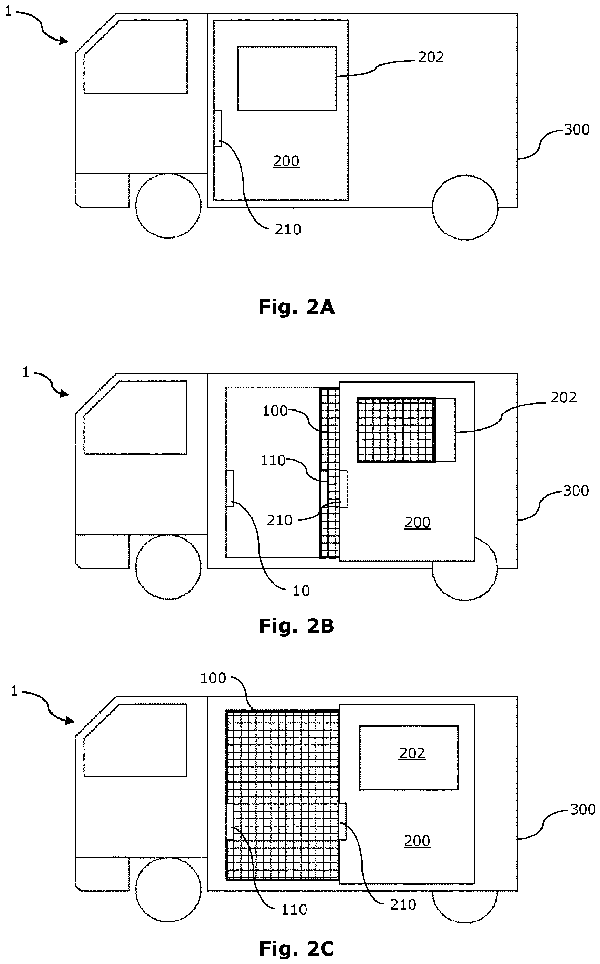

Fig. 1 is a schematic perspective view of a safety door 100 for a vehicle 1 (cf. Figs. 2A to 2C), such as a camping, delivery or craftsmen vehicle. The safety door 100 shown in Fig. 1 is a sliding door that is adapted to slide horizontally for opening/closing a door opening of a vehicle.

The safety door 100 includes a rigid sliding door leaf 120 having multiple through openings 123, 125 for letting air pass through and at the same time preventing unwanted persons or animals from entering a vehicle, when the safety door is closed. Here, the through openings 123, 125 of the rigid sliding door leaf have an equivalent diameter in a range of 1 cm to 15 cm, preferably in a range from 3 cm to 9 cm and even more preferably in a range from 5 cm to 7 cm.

The sliding movement of the safety door 100 is guided by a lower guiding means 128 and an upper guiding means 126, which are integrally formed with a frame element 122 of the rigid sliding door leaf 120. The lower guiding means 128 and the upper guiding means 126 are configured to engage with a respective guide track (not shown) for arranging the at least one rigid sliding door leaf 120 movable relative to a door opening 230 of the vehicle 1.

Further, the safety door includes a door lock 110 which may have a key cylinder 112. Said key cylinder may be assigned to the key of the vehicle, so that the safety door can be opened/closed using the vehicle's key. Particularly, the door lock 110 may be adapted to be locked via a central locking system of the vehicle. Thus, in case the vehicle is locked, the safety door is accordingly locked. Further, when the safety door may be unlocked, the vehicle may be unlocked as well. Further, the door look is configured to lock the safety door in a closed position, while a door of the vehicle that is assigned to the same door opening is opened.

As best seen in Fig. 1, the safety door's rigid sliding door leaf 120 includes a frame element 122, which includes at least two lateral beams and guiding means 126, 128. A grid structure 124, assembled (e.g. welded) from multiple horizontal and vertical beams fills the frame element 122. It is to be understood, that the grid structure 124 is not limited to a specific appearance.

Fig. 2A to 2C provide schematic side views of a vehicle 1, such as a camping, delivery or craftsmen vehicle, while a safety door 100 of the vehicle is operated. The vehicle 1 comprises a door opening 230 and a door 200. The door may have a window 202. As shown in Fig. 2A to 2C, the door opening 230 may be provided in a wall, particularly a side wall 300 of the vehicle. In a particular aspect, the door opening is provided between a B-column and a C- column of the vehicle.

In the embodiment shown, the door 200 is a sliding door that is adapted to open and close the door opening 230. In Fig. 2A, door 200 is closed and a lock 210 of the door 200 is locked with a corresponding locking element 10 (here a locking striker) of the vehicle. The locking striker is provided at or in close proximity to the B-column.

In Fig. 2B, the door 200 is opened, so that passengers may enter/leave the vehicle through the door opening 230. The safety door 100 of the vehicle, which may be the safety door depicted in Fig. 1, is also opened. For closing the door opening 230 but letting air enter the vehicle 1, the safety door 100 can be moved in the closed position (cf. Fig. 2C). Here, the door lock 110 of the safety door locks with the corresponding locking element 10 of the vehicle, thereby locking the vehicle 1, while door 200 is opened.

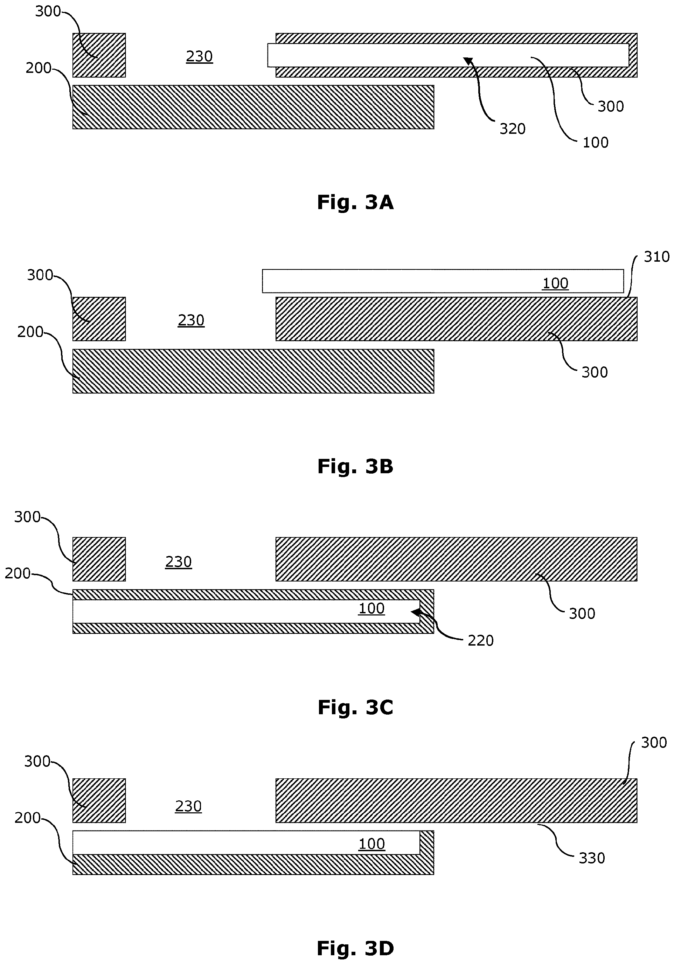

Figs. 3A to 3D show schematic cut views of a safety door 100 and a side wall 300 of a vehicle 1. These figures depict alternatives for guiding the safety door, respectively the rigid sliding door leaf.

In Fig. 3A, the safety door 100 is guided within a pocket 320. Said pocket 320 is provided in the side wall 300 of the vehicle 1. Hence, the safety door 100 can be stored inside the side wall 300 when being opened.

In Fig. 3B, the safety door 100 is guided along an inner side of a wall 300 of the vehicle 1, when being opened and/or closed. This allows easy access to the safety door, e.g. for retrofitting or maintenance work.

In Fig. 3C, the safety door 100 is guided within a pocket 220. Said pocket 220 is provided in the door 200 of the vehicle 1. Hence, the safety door 100 can be stored inside the door 200 when being opened.

In Fig. 3D, the safety door 100 is guided along an outer side of a wall 300 of the vehicle 1, when being opened and/or closed. Here, the safety door is sandwiched between the door 200 and the wall 300.

Additionally, a mosquito repellent (not shown) may be provided, hindering mosquitos and other insects from entering the vehicle. The mosquito repellent may be a net element, a curtain element (such as an area blind or a pleated blind) or a door element that is assigned to the door opening of the vehicle 1. The mosquito repellent may include respective guiding means for guiding an opening and closing movement of the mosquito repellent. Those mosquito repellent guiding means may run substantially parallel to the guiding means of the safety door. In a particular aspect, the mosquito repellent (and particularly the guiding means thereof) may be routed along an inner side of a wall 300 of the vehicle 1, within a pocket 320 of the wall of the vehicle 1 and/or within a pocket 220 of the door 200 of the vehicle 1.

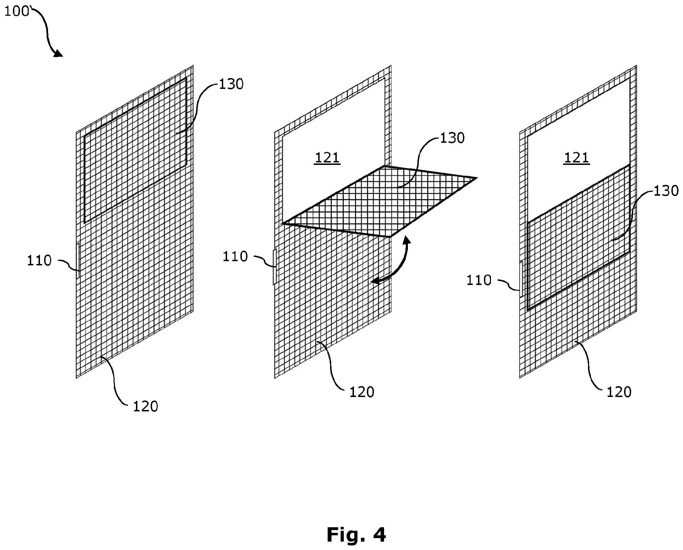

Fig. 4 gives a schematic perspective view of further safety door 100'. This safety door 100' includes a rigid sliding door leaf 120 that further includes a hinged portion 130. Said hinged portion is pivotable relative to the rigid sliding door leaf 120. As shown in the very left illustration of Fig. 4, the hinged portion 130 may be folded out. In this folded-out configuration a window opening 121 of the rigid sliding door leaf 120 is closed and the safety door 100 is adapted to close the door opening 230 of the vehicle completely. As shown the middle of Fig. 4, the hinged portion can be pivoted (folded), leading to the configuration shown on the right side. Here, the window opening is opened. When the safety door 100 is opened, while the hinged portion 130 is folded, a window 202 of the vehicle is not covered by the safety door, as the opened window opening 121 of the rigid sliding door leaf 120 may match the window 202.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

### List of reference signs

- 1: vehicle, such as a camping, delivery or craftsmen vehicle
- 10: corresponding locking element
- 100: safety door
- 100': safety door
- 110: door lock of the safety door
- 112: key cylinder
- 120: rigid sliding door leaf
- 122: frame element
- 123: through opening
- 124: grid structure
- 125: through opening
- 126: upper guiding means
- 128: lower guiding means
- 130: hinged portion
- 200: door (sliding door) of camping vehicle
- 202: window
- 210: door lock of the camping vehicle's safety door
- 220: pocket
- 230: door opening
- 300: wall
- 310: inner side of wall
- 320: pocket
- 330: outer side of wall

## Claims

1. A safety door (100) for a vehicle (1), particularly a camping vehicle, the safety door (100) being a sliding door, including
at least one rigid sliding door leaf (120) having through openings (123, 125) for letting air pass through;
a lower guiding means (128) and/or an upper guiding means (126), wherein the lower guiding means (128) and/or an upper guiding means (126) are configured to engage with a respective guide track for arranging the at least one rigid sliding door leaf (120) movable relative to a door opening (230) of the vehicle (1),
a door lock (110), the door look being configured to lock the safety door in a closed position, while a door (200) of the vehicle (1) assigned to the door opening (230) is opened, wherein in its closed position, the safety door (100) closes the door opening (230).

2. The safety door (100), according to claim 1, wherein
the safety door (100) is a bypass door, having at least two rigid sliding door leafs (120), that are configured to slide past each other, or wherein
the safety door (100) is an accordion door, having at least two rigid sliding door leafs (120) being hinged to each other so that the safety door (1) folds while opening, or wherein
the safety door (100) is a roll door, having at least two rigid sliding door leafs (120) being hinged to each other so that the safety door (1) rolls-up while opening.

3. The safety door (100), according to any one of claims 1 or 2, wherein the safety door (100) further includes an actuator for automatically opening and/or closing the safety door (100).

4. The safety door (100), according to any one of claims 1 to 3, wherein the rigid sliding door leaf (120) further includes
a frame element (122) and a grid structure (124), wherein
the grid structure (124) at least partially fills the frame element (122), and wherein
the grid structure may include a perforated sheet metal and/or interconnected beams.

5. The safety door (100), according to any one of claims 1 to 4, wherein
the rigid sliding door leaf (120) is made at least in part from aluminum, steel and/or fiber reinforced plastics, wherein
the reinforcement fibers of the fiber reinforced plastic may be chosen from the group of steel fibers, glass fibers, aramid fibers, carbon fibers, PBO fibers and/or boron fibers.

6. The safety door (100, 100'), according to any one of claims 1 to 5, wherein
the rigid sliding door leaf (120) includes a hinged portion (130) being arranged pivotable relative to the rigid sliding door leaf (120), and/or wherein
the rigid sliding door leaf (120) includes a sliding portion (130) being arranged slidable relative to the rigid sliding door leaf (120).

7. The safety door (100), according to any one of claims 1 to 6, wherein
the through openings of the rigid sliding door leaf have an equivalent diameter in a range of 1 cm to 15 cm, or in a range from 3 cm to 9 cm, or in a range from 5 cm to 7 cm.

8. The safety door (100), according to any one of claims 1 to 7, wherein
the door lock (110) of the safety door (100) is adapted to engage with a corresponding locking element (10) of the vehicle (1), the corresponding locking element may be assigned to the door (200) of the vehicle (1) and/or the guide track.

9. The safety door (100), according to any one of claims 1 to 8, wherein the door lock (110) is adapted to be locked via a central locking system of the vehicle (1).

10. The safety door (100), according to any one of claims 1 to 9, wherein
the guide track that engages with the lower guiding means (128) and/or the upper guiding means (126) is configured to be attached to the vehicle (1), or to be integrated in an autobody of the vehicle (1).

11. The safety door (100), according to any one of claims 1 to 9, wherein the guide track that engages with the lower guiding means (128) and/or the upper guiding means (126) is a wall-mount guide track, a bottom-mount guide track or a ceiling-mount guide track.

12. A vehicle (1), particularly a camping, delivery or craftsmen vehicle, the vehicle (1) comprising
a door opening (230), and
a door (200), particularly a hinged door or a sliding door, the door (200) being adapted to open and close the door opening (230);
the vehicle (1) further comprising a safety door (100) according to any one of claims 1 to 11, wherein the safety door (100) is assigned to the door opening (230) and adapted to close the door opening (230), while the door (200) of the vehicle (1) is opened.

13. The vehicle (1) according to claim 12, wherein the safety door (100) is guided along an inner side of a wall (300) of the camping vehicle (1), when being opened and/or closed, or along an outer side (330) of a wall (300) of the camping vehicle (1), when being opened and/or closed, so as to be sandwiched between the door (200) and the wall (300).

14. The vehicle (1) according to claim 12, wherein
the safety door (100) is guided within a pocket (320) of a wall (300) of the camping vehicle (1), when being opened and/or closed, or wherein
the safety door (100) is guided within a pocket (220) of the door (200) of the camping vehicle (1), when being opened and/or closed.

15. The vehicle (1) according to any one of claims 12 to 14, further comprising a mosquito repellent, the mosquito repellent including at least one guiding means for guiding an opening and closing movement of the mosquito repellent, wherein
the mosquito repellent's guiding means may be run substantially parallel to the guiding means of the safety door, and wherein
the mosquito repellent may optionally be routed along an inner side of a wall (300) of the vehicle (1), within a pocket (320) of the wall (300) of the vehicle (1) and/or within a pocket (220) of the door (200) of the vehicle (1).
